Europäisches Patentamt

European Patent Office

Office européen des brevets

(19)

(11) Publication number: **0 521 161 A1**

# EUROPEAN PATENT APPLICATION
## published in accordance with Art. 158(3) EPC

(12)

(21) Application number: 92902749.8

(22) Date of filing: **09.01.92**

(86) International application number:
**PCT/JP92/00009**

(87) International publication number:
**WO 92/11986 (23.07.92 92/19)**

(51) Int. Cl.5: **B29C 67/16**

(30) Priority: **11.01.91 JP 13647/91**

(43) Date of publication of application:
**07.01.93 Bulletin 93/01**

(84) Designated Contracting States:
**BE DE FR GB IT NL**

(71) Applicant: **MITSUI TOATSU CHEMICALS, Inc.**
**2-5 Kasumigaseki 3-chome**
**Chiyoda-Ku Tokyo 100(JP)**

(72) Inventor: **NAKAKURA, Toshiyuki 8-7, Ozuki**
**Sakae-ku**
**Yokohama-shi**
**Kanagawa 247(JP)**
Inventor: **SAKAI, Hideo 967-1-616,**
**Kashiwagaya**
**Ebina-shi**
**Kanagawa 243-04(JP)**
Inventor: **KOBA, Tomohito 1541, Yabecho**

**Totsuka-ku**
**Yokohama-shi**
**Kanagawa 244(JP)**
Inventor: **MASUDA, Misao 557, Takakura**
**Fujisawa-shi**
**Kanagawa 252(JP)**
Inventor: **KISHI, Satoru 2882, Iijimacho**
**Sakae-ku**
**Yokohama-shi**
**Kanagawa 244(JP)**
Inventor: **MARUKO, Chiaki 3-11-4, Ohfuna**
**Kamakura-shi**
**Kanagawa 247(JP)**
Inventor: **TANABE, Hiroshi 4-5-45, Dai**
**Kamakura-shi**
**Kanagawa 247(JP)**

(74) Representative: **Stuart, Ian Alexander et al**
**MEWBURN ELLIS 2 Cursitor Street**
**London EC4A 1BO(GB)**

(54) **METHOD AND DEVICE FOR CONTINUOUSLY FORMING ROD-LIKE FIBER-REINFORCED RESIN MATERIAL.**

(57) A method and a device for continuously forming rod-like fiber-reinforced resin materials susceptible to impregnation and high in fiber content. The method is characterized in that a fiber-reinforced thermoplastic resin sheet (200) containing fibers arranged in the form of a sheet and impregnated with thermoplastic resin is divided into strips each containing a specified number of fibers and passed through grooves of a roll (30) while kept softened and under tension. The device is characterized by being provided with means to supply a fiber-reinforced thermoplastic resin sheet (200) containing fibers arranged in the form of a sheet and impregnated with thermoplastic resin, and with a grooved roll (30) for forming said sheet whose resin is kept softened into rod-like strips.

EP 0 521 161 A1

# F I G. 4

## Technical Field

This invention relates to a continuous production process of a fiber-reinforced, rod-like resin material and also to an apparatus therefor.

## Background Art

The wire-coating process is widely known as a continuous process for the production of a fiber-reinforced resin in the form of a rod. Namely, a plurality of reinforcement fibers are impregnated with a molten resin while these reinforcement fibers are passing through a crosshead attached to an extruder and, subsequent to cooling, are taken up.

In the process described above, the impregnation and the forming are, however, conducted at the same time so that the fibers in a center part are poorly impregnated with the thermoplastic resin due to insufficient to remove air in the fiber bundle although the fibers on the side of a surface of the resulting rod are impregnated with the resin, resulting in the problem that the resulting rod-like resin material has reduced physical properties. An attempt to obtain a rod-like resin material having a high fiber content leads to breakage of fibers in a crosshead, so that the fiber contents of generally-available, rod-like resin materials are limited to 50 wt.% at most. There has hence been another problem that production of a rod-like resin material containing fibers beyond the above maximum content is difficult.

As is practiced in the case of thermosetting resins, it may be contemplated to obtain a rod by feeding resin-impregnated, reinforcement fibers through a bore, in other words, by applying so-called "pultrusion" to a thermoplastic resin. Fibers are however broken inside the bore, leading to the inconvenience that no long-hour operation is feasible.

## Disclosure of the Invention

An object of the present invention is. therefore, to provide a process for the continuous production of a fiber-reinforced, rod-like resin material which has been impregnated sufficiently with a resin and has a high fiber content, and also an apparatus therefor.

The present inventors have proceeded with an extensive investigation to overcome the problems described above. As a result, it has been found that impregnating and forming one by one permits a high fiber content and good resin impregnation, leading to the completion of this invention.

Namely, the process of this invention is a process for the continuous production of a fiber-reinforced rod-like resin material consisting essentially of reinforcing fibers impregnated with a thermoplastic resin, which comprises bringing a thermoplastic resin to a softened state wherein the said thermoplastic resin is in a fiber-reinforced thermoplastic resin sheet consisting essentially of reinforcing fibers arranged into sheet-like shape and impregnated with the thermoplastic resin, and then passing a desired number of the reinforcing fiber impregnated with the thermoplastic resin under a tension through a groove formed on a roll.

Further, the apparatus of this invention is an apparatus for the continuous production of a fiber-reinforced rod-like resin material consisting essentially of reinforcing fibers impregnated with a thermoplastic resin, which comprising a fiber draw-out section for drawing out plural fibers, a feed section having a means for aligning the fibers in a direction into a sheet-like shape, an impregnating section for impregnating the reinforcing fibers with the thermoplastic resin, a forming section for forming the sheet-like fibers impregnated with the resin into a rod-like shape, and a take-up section for taking up the rod-like resin material; or an apparatus for the continuous production of a fiber-reinforced rod-like resin material consisting essentially of reinforcing fibers impregnated with a thermoplastic resin, which comprising a wind-out section for winding out a sheet consisting essentially of reinforcing fibers impregnated with the thermoplastic resin, a slitting section for slitting the fiber-reinforced thermoplastic resin sheet at constant widths in the direction of the fibers, a preheating section for preheating the thus-slitted sheet to bring the thermoplastic resin into a softened state, a forming section for forming the thus-softened sheet into a rod-like shape, and a take-up section for taking up the fiber-reinforced rod-like resin material.

In the process of this invention for the production of a fiber-reinforced rod-like resin material, there is a case where an apparatus having a forming section and a take-up section is installed and used. The forming section is for forming the sheet into rod-like shape while the thermoplastic resin is in a softened state on just the behind of an apparatus for manufacturing a fiber-reinforced thermoplastic resin sheet consisting essentially of reinforcing fibers arranged into sheet-like shape and impregnated with the thermoplastic resin. The take-up section is for taking up the resin material formed into rod-like shape. Furthermore, there is the another case where an apparatus comprising a wind out section for winding out a manufactured beforehand

3

fiber-reinforced rod-like resin sheet consisting essentially of reinforcing fibers arranged into sheet-like shape and impregnated with the thermoplastic resin, a slitting section for slitting the fiber-reinforced thermoplastic resin sheet at constant widths in the direction of the fibers, a preheating section for preheating the thus-slit sheet to bring the thermoplastic resin into a softened state, a forming section for forming the sheet into a rod-like shape after the thermoplastic resin is brought into the softened state, and a take-up section for taking up the fiber-reinforced resin material formed into rod-like shape. The effect of this invention appears in both of the cases.

Brief Description of the Drawings

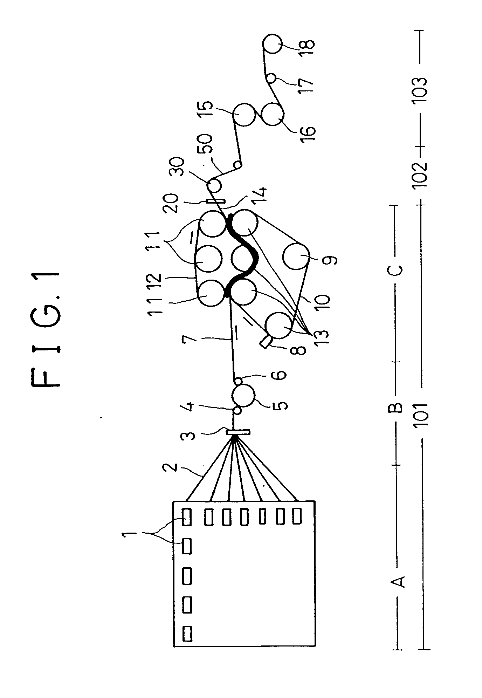

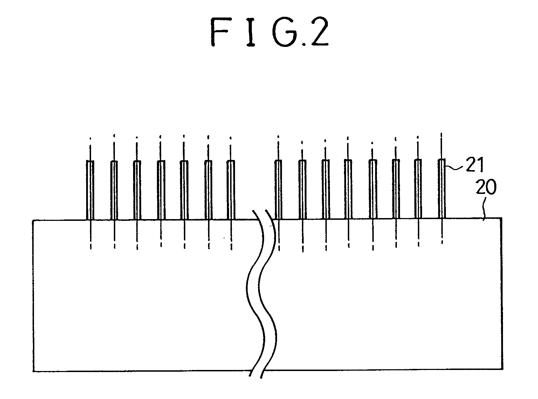

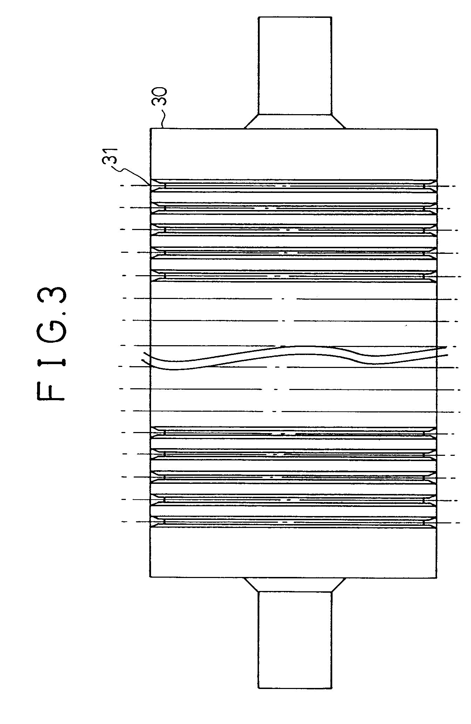

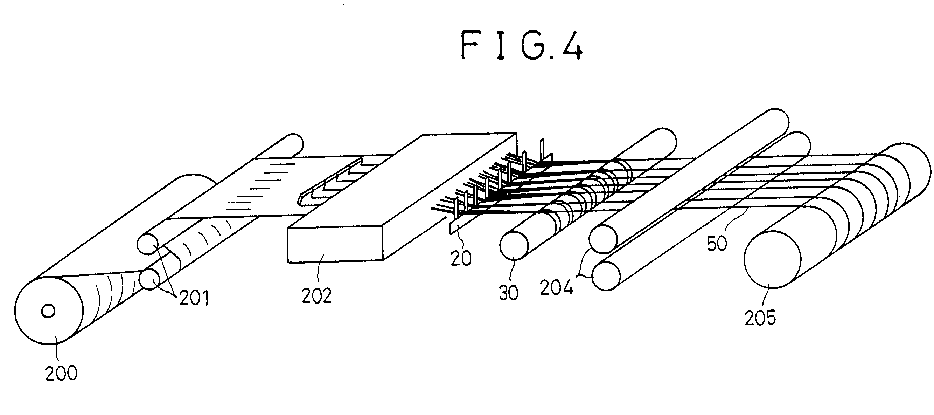

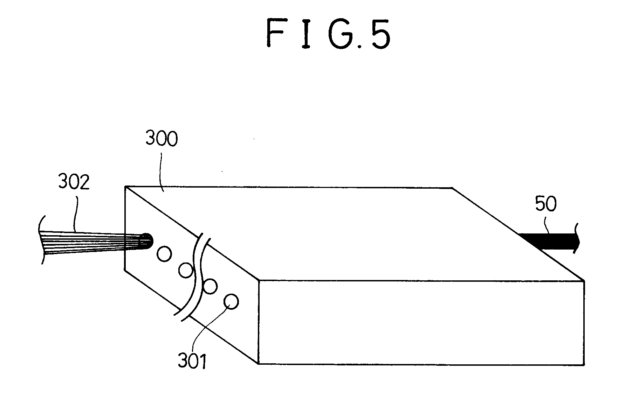

FIGURE 1 schematically illustrates one embodiment of the present invention. FIGURE 2 shows a distributor for guiding a sheet-like resin to a forming roll. FIGURE 3 illustrates in front view the forming roll for forming the sheet-like resin into a rod-like shape. FIGURE 4 depicts another embodiment of this invention. FIGURE 5 shows a sheet-like resin in the state that the resin is being formed into a rod-like shape through a pultrusion die.

Best Modes for Carrying Out the Invention

The term "rod-like" as used herein means a so-called elongated shape or the like, whose cross-section may have either a regular shape or irregular shape irrespective of the kind of the shape, for example, may be circular, elliptical, rectangular or the like.

In the case of a circular cross-section, its diameter may desirably be from 1.5 mm to 4 mm. If the cross-section is elliptical, it is desirable that its minor axis is 1.5 mm or longer and its major axis is 4 mm or shorter. In the case of a rectangular cross-section, its end and side may desirably be 1.5 mm or longer and at 4 mm or shorter, respectively.

In the case of a size smaller than 1.5 mm which is outside the above range, fibers tend to break upon formation. If the size is greater than 4 mm, on the other hand, a central part of the rod cannot be cooled sufficiently and the rod cannot retain its rod-like shape unless a sufficient cooling time is taken upon formation into the rod-like shape. The production speed must, therefore, be slowed down, leading to a reduction in the productivity. If pellets are formed for use in injection molding, a large-size rod tends to result in problems such as poor fiber distribution and greater strength scattering.

Further, the term "plural continuous fibers" as used herein means a plurality of filament assemblies constituting fibers, i.e., those known under the name of rovings, yarns or tows. The filaments are sufficiently long so that the continuous fibers have sufficient strength to be pulled in contact with a coating film of the molten thermoplastic resin under conditions employed. Although preferred materials include glass fibers, carbon fibers, and high-elasticity synthetic fibers, it is possible to use inorganic fibers such as silicon carbide fibers or alumina fibers or metallic fibers such as titanium fibers, boron fibers or stainless steel fibers.

The diameter of filaments of reinforcement fibers is usually 5-20 $\mu$m. It is only necessary to use tows, each of which consists of 200-12,000 of such filaments bundled together, as many as needed in view of the width of a fiber-reinforced thermoplastic resin sheet to be produced.

Preferably, synthetic resin fibers are subjected to surface treatment so that they have adhesion with a thermoplastic resin to be used for impregnation. Further, it is necessary that properties such as strength are not altered at the melting temperature of the thermoplastic resin employed. Examples of synthetic resin fibers include aramid fibers ("Kevlar", trade mark).

Preferably, glass fibers and carbon fibers are coated at their surfaces with a surface treatment agent such as a silane or titanium coupling agent so that their adhesion to resin according to the thermoplastic resin employed. Further, it is preferred from the standpoint of handling ease to use a binder to prevent loosening of rovings or tows during their handling.

Thermoplastic resins usable in the present invention can include polystyrene, polyvinyl chloride, high-density polyethylene, polypropylene, nylon, polycarbonate, polybutylene terephthalate, polyethylene terephthalate, thermoplastic polyimides, polyethersulfone, polysulfone, polyetherimide ("ULTEM", trade mark), polyetheretherketone, etc.

When these resins are used, it is preferable to dry them in advance. In addition, it is more preferred to add a coupling agent such as a titanium coupling agent to the resins in order to improve their adhesion with fibers.

To impregnate the above fibers arranged in one direction with the thermoplastic resin and then to form the thus-impregnated fibers into a sheet-like shape, processes generally known in the present field of art

4

can all be used. Examples include the melt impregnation process in which fibers are impregnated with a thermoplastic resin in a molten state and the fluidized bed process in which fibers are impregnated with a powdery thermoplastic resin in a form suspended in a gas such as air or in a liquid such as water.

The fiber content of a fiber-reinforced thermoplastic resin sheet produced by a process as described above is 60-85 wt.% desirably. Unduly low fiber contents cannot exhibit sufficient physical properties, whereas excessively high fiber contents result in poor impregnation of fibers with a resin, thereby developing problems such as reduced physical properties.

The desired thickness of the fiber-reinforced thermoplastic resin sheet ranges from 0.1 mm to 0.5 mm. A sheet of less than 0.1 mm in thickness requires the use of reinforcement fibers formed of a few filaments having a small diameter, and involves problems such that small-diameter fibers are susceptible to breakage upon production of the fiber-reinforced thermoplastic resin sheet and are difficult to finish the sheet uniform and the filaments of the fibers are broken in grooves upon production of a rod and the fibers so broken often deposit in the grooves to make it difficult to continue the operation. If the thickness of the sheet is greater than 0.5 mm, on the other hand, the resin is not allowed to penetrate to an inner part of the bundled fibers, resulting in poor impregnation in many instances. This leads to the problem that, when processed into a rod, unimpregnated fibers come to the surface of the rod to lower the quality of the rod.

The fiber-reinforced thermoplastic resin sheet obtained as described above contains bubbles at fiber-resin interfaces if the resin-wettability of the fibers is poor. Such a state is generally called "existence of voids".

The mechanical strength of a fiber-reinforced thermoplastic resin sheet becomes higher as the number of voids becomes smaller. For a fiber-reinforced material, it is therefore necessary to make voids fewer as much as possible. Obviously, a rod produced from a fiber-reinforced thermoplastic resin sheet having fewer voids has superior strength properties. It is presupposed that the fiber-reinforced thermoplastic resin sheet used in the present invention has fewer voids.

As a method for measuring the percentage of such voids, the present invention has adopted the method that each fiber-reinforced thermoplastic resin sheet is immersed in a solvent having high surface-activating ability and the weight change between before and after the immersion is measured. A greater weight change indicates a greater amount of the solvent penetrated into the voids, thereby making it possible to decide that the adhesion between the fibers and the resin is poor and the strength is low.

In the present invention, water containing 20% of alcohol was used as a solvent for the measurement of each void percentage

The void percentage as specified in the present invention is defined as follows:

$$\text{Void percentage} = \frac{W_1 - W_0}{W_0} \times 100 \quad (\%)$$

where

$W_0$: fiber-reinforced thermoplastic resin sheet before immersion, and

$W_1$: fiber-reinforced thermoplastic resin sheet after immersion.

Fiber-reinforced, rod-like resin materials obtained using fiber-reinforced thermoplastic resin sheets having a void percentage of greater than 5% can hardly be used as structural materials because their fibers and resin are not distributed evenly and their strength is low.

To form the sheet-like resin obtained as described above, known methods can all be employed usually. For example, the sheet-like resin is caused to pass under pressure between a pair of rolls having semi-circular grooves while the thermoplastic resin is in a molten state, or tension is applied to the fibers in the sheet-like resin and the sheet-like resin is pressed against a roll having semi-circular grooves while the resin is in a molten state.

Regarding the shape of grooves carved on the roll, the bottoms of the grooves can be machined, for example, into a semi-circular shape where circular or elliptical rods are desired or into a flat shape where rods with a rectangular or square cross-section are desired. Desirably, the grooves are formed to a depth sufficient to prevent fiber bundles from jumping out. It is therefore preferred to form the grooves 3-6 times as deep as the thickness of rods to be formed. On the other hand, the width of the grooves should be determined corresponding to the thickness of the rods to be formed. Since the volume of a thermoplastic resin shrinks when the thermoplastic resin becomes colder and solid from a molten state, the grooves are generally carved with a width 3-25% greater than the thickness of rods in view of the volume shrinkage. A width optimum to the resin employed should be determined through trial.

When a pair of forming rolls are employed for example, the pressure required for the forming can preferably be 3-10 kg/cm$^2$ in terms of linear pressure. If the linear pressure is low, fiber bundles cannot be closely put together, thereby failing to provide high rod strength. If the linear pressure is greater than 10 kg/cm$^2$, on the other hand, filaments which make up the fiber bundles are broken between the rolls and wind around the rolls, thereby causing a trouble on the continuous operation.

When a single forming roll is employed, the tension applied to each fiber is preferably 4-12 kg/cm$^2$. If the pressure is low, fiber bundles may not be closely put together so that the resulting rods may not be provided with sufficient strength. If the pressure is higher than 12 kg/cm$^2$, on the other hand, filaments which make up the fiber bundles are strongly rubbed by the grooves of the roll, whereby the filaments may be broken and may wind around the roll, thereby causing a trouble on the continuous operation.

As the temperature of the forming roll or rolls, high temperature is desired from the standpoint of forming efficiency. Unduly high temperature is, however, not desired as it can deteriorate the resin and can impair the release property. Accordingly, it is desirable to set it at a temperature between the glass transition temperature of the thermoplastic resin and its softening point.

The roll temperature may be, for example, 60-80°C for polystyrene, polypropylene, polyethylene, AS resin, ABS resin, ASA resin (polyacrylonitrile-polystyrene-polyacrylate), polymethyl methacrylate, nylon and polyacetal; 70-90°C for polyethylene terephthalate and fluorinated resins; 80-100°C for polyphenylene oxide, 100-120°C for polycarbonate; 120-130°C for polyphenylene sulfide and polysulfone; 140-160°C for polyethersulfone; and 130-140°C for plyetheretherketone.

The surface of each forming roll should preferably be smooth from the standpoint of resin releasability. It is particularly preferred to coat the roll surface especially with polytetrafluoroethylene, ceramics or the like.

It is preferable to provide a means for guiding fibers, which are contained in a sheet-like resin, in a predetermined number into the grooves of forming roll. Such a means can be formed, for example, by arranging cutter blades, rods or the like side by side at constant intervals so that the fibers are allowed to pass in a predetermined number through openings therebetween.

The fiber-reinforced rod-like resin material obtained as described above can be use as it is, for example, as a fishing rod or the like. It can also be used as a prepreg for filament winding or compression forming. It is also possible to use it as pellets for injection molding by chopping the same into constant lengths.

Details of the present invention will next be described on the basis of representative embodiments illustrated in the drawings. In the embodiments to be described below, a fiber draw-out section A, a feed section B and a resin-impregnating section C, which are shown in FIGURE 1, followed the process and apparatus disclosed in Japanese Patent Publication No. 48907/1990.

FIGURE 1 is a schematic side view showing one embodiment of the present invention, FIGURE 2 is a front view illustrating a distributor for guiding a sheet-like prepreg to a forming roll, and FIGURE 3 is a front view of the forming roll for forming the sheet-like prepreg into a rod-like shape.

As is illustrated in FIGURE 1, an apparatus for practicing the present invention comprises a sheet-like resin forming section 101. which consists of the fiber draw-out section A, the feed section B and the resin-impregnating section C, a forming section 102 and a take-up section 103.

Fibers 2 which have been drawn out from bobbins 1 provided in the fiber draw-out section A are aligned in one direction by an alignment device 3 in the feed section B. The fibers 2 are then fed past tension control rolls 4,5,6, thereby forming a fiber sheet 7.

The fiber sheet 7 next enters the resin-impregnating section C, where the fiber sheet 7 is brought into contact with a lower belt 10 on a surface of which a thin film of a thermoplastic resin has been coated through a die 8. The resin was plasticized in an extruder (not illustrated). The fiber sheet 7 is pressed by heating rolls 13 or 11 via the lower belt 10 or an upper belt 12 and is hence impregnated with the resin, whereby a sheet-like resin 14 is obtained. While the resin is still in a softened state, the sheet-like resin 14 obtained in the sheet-like resin forming section 101 is fed past a distributor 20 and a forming roll 30 into fiber-reinforced, rod-like resin materials 50. The distributor 20 is provided with a predetermined number of pins 21. The fibers contained in the sheet-like resin 14 are caused to pass in a predetermined number through openings between the pins, thereby facilitating introduction of fiber bundles into grooves 31 formed in a surface of the forming roll 30. This distributor 20 can be omitted where the introduction of fiber bundles into the grooves 31 formed on the forming roll 30 is not difficult. The forming roll 30 is provided with the grooves 31 as many as needed. The sheet-like resin 14 is formed into a rod-like shape while the fiber bundles in the sheet-like resin 14, said fiber bundles having been divided through the distributor 20, are passing under tension and pressure through the grooves. The fiber-reinforced, rod-like resin materials obtained as described above are cooled in a cooling section (not illustrated) and are then taken up in the take-up section 103.

FIGURE 4 is a schematic illustration showing another embodiment of the present invention. As is shown in FIGURE 4, a rolled, fiber-reinforced thermoplastic resin sheet 200 is wound out, fed past guide rolls 201, and then heated in a heater 202 until the thermoplastic resin is brought into a molten state. Fiber-reinforced rod-like resin materials 50 are then fed past the distributor 20 and the forming roll 30 and, via a take-up shaft 204, are wind by a wind-up roll 205, whereby fiber-reinforced rod-like resin materials according to the invention can be provided.

The temperatures of the distributor 20 and forming roll 30 must be controlled so that the resin in the molten state can be prevented from becoming colder and solid. To improve the productivity, it is possible to arrange a cooler after the forming roll 30 so that a rod-like shape can be imparted promptly.

The present invention will hereinafter be described by the following examples.

Example 1

Employed was an apparatus shown in FIGURE 1, the specifications of respective elements of which were as follows: the number of the bobbins = 100, extruder = 30 mm in diameter, the width of the rolls 9,11,13 = 400 mm, the diameter of the rolls = 240 mm, the thickness and width of the upper and lower belts 10,12 = 0.5 mm and 350 mm respectively.

Further, the distributor 21 employed had 26 pins 21 having a diameter of 1 mm and arranged at inter-pin pitches of 8 mm while the forming roll 30 used was provided with 25 semi-circular grooves 31 having a diameter of 2 mm and formed at center-to-center intervals of 8 mm on a roll having 100 mm in diameter and 240 mm in length.

After 100 glass fibers paid out from the bobbins 1, respectively, were aligned in one direction through the alignment device 3, they were fed past the tension control rolls 4,5,6 into a fiber sheet 7 of 200 mm in width.

On the other hand, polypropylene which had been heated and molten at 200°C by the extruder (not illustrated) was coated through the die 8 to a thickness of 70 $\mu$m onto the surface of the lower belt 10 which had been heated to 240°C by rolls therefor. While being held between the lower belt and the upper belt 12 heated by the rolls 11 for the upper belt, the sheet was caused to pass at a speed of 1 m/min and under a tension of 400 kg between the impregnating rolls 11 and 13 heated at 240°C in the state shown in FIGURE 1. In the manner described above, the sheet-like prepreg consisting of the glass fibers impregnated with polypropylene was caused to pass through the opening between the pins 21 of the distributor 20 while the glass fibers in the prepreg were divided 4 by 4. The prepreg was then fed past the forming roll on which grooves of 2.3 mm in width and 10 mm in depth had been carved. During that time, the distributor and forming rolls were controlled at 70°C. The tension per fiber bundle when the prepreg was fed past the forming roll was 4 kg.

The fiber-reinforced take up resin materials obtained as described above were cooled, hauled off by the take-up rolls 15,16,17 in the take-up section 103, and then wound up by the wind-up shaft 18.

Even after a continuous operation was conducted for 10 hours, problems in operation such as fiber breakage did not occur.

The distributor 20 and forming roll 30 were then removed, and then a fiber-reinforced thermoplastic resin sheet for the measurement of its void percentage was manufactured.

Measurement results of the fiber content and void percentage of the fiber-reinforced thermoplastic resin sheet were 70 wt.% and 0.2%, respectively. Further, the tensile strength of the resultant fiber-reinforced rod-like resin materials was 120 kg/mm$^2$.

The fiber-reinforced rod-like resin materials were then chopped into 10 mm lengths so that master pellets were provided for injection molding. Those master pellets and an injection molding polypropylene resin were combined into an injection molding material having a fiber content of 30%, which was then molded into a molded article by a conventional injection molding machine. The tensile strength and Izod impact strength of the molded article were 1100 kg/cm$^2$ and 25 kg•cm/cm, respectively.

Example 2

A sheet-like resin was obtained in a similar manner to Example 1 except that the 100 glass fibers were replaced by 140 carbon fibers, polycarbonate was substituted for the polypropylene, the melting temperature in the extruder was raised from 200°C to 290°C, and the heating temperature was raised from 240°C to 310°C. The fibers in the resin were caused to pass 6 by 6 through the distributor and then processed in a similar manner to Example 1 except that the temperature of the forming roll was raised to 180°C,

7

whereby fiber-reinforced rod-like resin materials were obtained.

As in Example 1, the distributor 20 and forming roll 30 were then removed, and then a fiber-reinforced, thermoplastic resin sheet for the measurement of its void percentage was manufactured. Measurement results of the fiber content and void percentage of the fiber-reinforced thermoplastic resin sheet were 60 wt.% and 5.2%, respectively. Further, the tensile strength of the resultant fiber-reinforced rod-like resin materials was 180 kg/mm$^2$.

The fiber-reinforced rod-like resin materials were then chopped into 10 mm lengths as in Example 1 so that master pellets were provided for injection molding. Those master pellets and an injection molding polycarbonate resin were combined into an injection molding material having a fiber content of 30 wt.%, which was then molded into a molded article by a conventional injection molding machine. The tensile strength and Izod impact strength of the molded article were 1400 kg/cm$^2$ and 29 kg•cm/cm, respectively.

Example 3

A fiber-reinforced thermoplastic resin sheet was produced under similar conditions to Example 1 except that the distributor 20 and forming roll 30 were removed. Measurement results of the fiber content and void percentage of the fiber-reinforced thermoplastic resin sheet were 70 wt.% and 0.2%, respectively.

The fiber-reinforced thermoplastic resin sheet 200 was fed past the guide rolls 201, at a speed of 2 m/min through the heater controlled at 230°C and then past exactly the same distributor 20 and forming roll 30 as in Example 1, and was thereafter taken up by the take-up rolls 204, so that fiber-reinforced rod-like resin materials 205 were obtained.

The tensile strength of the fiber-reinforced rod-like resin materials obtained as described above was 122 kg/mm$^2$.

In a manner similar to Example 1, the fiber-reinforced rod-like resin materials were then chopped into 10 mm lengths to provide master pellets for injection molding. Those master pellets and an injection molding polypropylene resin were combined into an injection molding material having a fiber content of 30 wt.%, which was then molded into a molded article by a conventional injection molding machine. The tensile strength and Izod impact strength of the molded article were 1100 kg/cm$^2$ and 26 kg•cm/cm, respectively.

Comparative Example 1

Polypropylene which had been molten in an extruder was fed into a crosshead die having a bore of 2 mm in diameter and 300 mm in length. At the same time, five glass fibers employed in Example 1 were caused to pass through the bore in an attempt to bring the glass fibers into contact with the molten polypropylene while passing through the crosshead heated at 220°C and then to take up the same with a view toward obtaining fiber-reinforced rod-like resin materials having a fiber content of 60% Wf. The fibers were however cut off in the bore of the crosshead, thereby failing to smoothly haul off such fiber-reinforced rod-like resin materials. The number of glass fibers was, therefore, reduced to 4 and the above-described operation was conducted to coat the fibers with the resin, followed by cooling to obtain rods of 2 mm in diameter.

As a result of measurement of the fiber content and void percentage of the fiber-reinforced rod-like resin materials so obtained, they were found to be 50 wt.% and 5.2 %, respectively. In addition, the tensile strength of the fiber-reinforced, rod-like resin materials was 48 kg/mm$^2$.

Further, the fiber-reinforced, rod-like resin materials were then chopped into 10 mm lengths to provide master pellets for injection molding. Those master pellets and an injection molding polypropylene resin were combined into an injection molding material having a fiber content of 30 wt.%, which was then molded into a molded article by a conventional injection molding machine. The tensile strength and Izod impact strength of the molded article were 700 kg/cm$^2$ and 15 kg•cm/cm, respectively.

Comparative Example 2

Fiber-reinforced rod-like resin materials and a fiber-reinforced thermoplastic resin sheet were produced in a similar manner to Example 1 except that the fiber sheet was subjected to a tension of 70 kg between the impregnating rolls 11 and 13. The tension per fiber bundle upon production of the fiber-reinforced rod-like materials was 0.7 kg.

As a result of measurement of the fiber content and void percentage of the fiber-reinforced rod-like resin materials so obtained, they were found to be 60 wt.% and 5.2 %, respectively. In addition, the tensile strength of the fiber-reinforced rod-like resin materials was 60 kg/mm$^2$.

Further, the fiber-reinforced rod-like resin materials were then chopped into 10 mm lengths to provide master pellets for injection molding. Those master pellets and an injection molding polypropylene resin were combined into an injection molding material having a fiber content of 30 wt.%, which was then molded into a molded article by a conventional injection molding machine. The tensile strength and Izod impact strength of the molded article were 10 kg/cm$^2$ and 15 kg•cm/cm, respectively.

Comparative Example 3

Fiber-reinforced resin materials were produced in a similar manner to Example 1 except that a pultrusion die 300 shown in FIGURE 5 and having 25 holes 301 of 2 mm in diameter was equipped instead of the distributor 20 and forming roll 30 and a sheet-like resin 302 impregnated with molten thermoplastic resin reinforcing fibers and slit into constant widths was caused to pass through the holes 301 into fiber-reinforced rod-like resins 50. Ten minutes after the beginning of the production, fibers were cut off in three of the 25 holes so that continuation of the operation was no longer feasible.

Industrial Applicability

As has been described above, the present invention can exhibit the advantage that a fiber-reinforced rod-like resin material substantially free of voids and, if necessary, having a high fiber content can be continuously obtained because a sheet-like resin having good impregnation and a desired fiber content is produced and then formed into a rod-like shape.

**Claims**

1. A process for the continuous production of a fiber-reinforced rod-like resin material consisting essentially of reinforcing fibers impregnated with a thermoplastic resin, which comprises bringing a thermoplastic resin to a softened state wherein the said thermoplastic resin is in a fiber-reinforced thermoplastic resin sheet consisting essentially of reinforcing fibers arranged into sheet-like shape and impregnated with the thermoplastic resin, and then passing a desired number of the reinforcing fiber impregnated with the thermoplastic resin under a tension through a groove formed on a roll.

2. The process for the continuous production of a fiber-reinforced rod-like resin material of claim 1, wherein the fiber content and thickness of the fiber-reinforced thermoplastic resin sheet consisting essentially of reinforcing fibers arranged into sheet-like shape and impregnated with the thermoplastic resin are 60-85 wt.% and 0.1-0.5 mm, respectively, and the void percentage of the fiber-reinforced thermoplastic resin sheet is 5% or less in terms of water absorption percentage.

3. An apparatus for the continuous production of a fiber-reinforced rod-like resin material consisting essentially of reinforcing fibers impregnated with a thermoplastic resin, which comprising a fiber draw-out section for drawing out plural fibers, a feed section having a means for aligning the fibers in a direction into a sheet-like shape, an impregnating section for impregnating the reinforcing fibers with the thermoplastic resin, a forming section for forming the sheet-like fibers impregnated with the resin into a rod-like shape, and a take-up section for taking up the rod-like resin material.

4. The apparatus for the continuous production of a fiber-reinforced rod-like resin material of claim 3, wherein the impregnating section is constructed of a pair of belts passing in an S-form between plural heating rolls, the plural heating rolls for heating the belts, an extruder and die for coating a surface of the lower belt with the molten thermoplastic resin, and a drive mechanism for driving the heating rolls; and the forming section is constructed of a forming roll having grooves thereon and set on just the behind of the impregnating section.

5. An apparatus for the continuous production of a fiber-reinforced rod-like resin material consisting essentially of reinforcing fibers impregnated with a thermoplastic resin, which comprising a wind-out section for winding out a sheet consisting essentially of reinforcing fibers impregnated with the thermoplastic resin, a slitting section for slitting the fiber-reinforced thermoplastic resin sheet at constant widths in the direction of the fibers, a preheating section for preheating the thus-slit sheet to bring the thermoplastic resin into a softened state, a forming section for forming the thus-softened sheet into a rod-like shape, and a take-up section for taking up the fiber-reinforced rod-like resin material.

# FIG. 1

EP 0 521 161 A1

# F I G.2

FIG.3

FIG.4

# F I G.5

# INTERNATIONAL SEARCH REPORT

International Application No  PCT/JP92/00009

## I. CLASSIFICATION OF SUBJECT MATTER (if several classification symbols apply, indicate all) [6]

According to International Patent Classification (IPC) or to both National Classification and IPC

Int. Cl$^5$  B29B11/16, 15/12//B29K105:10, B29L31:06

## II. FIELDS SEARCHED

Minimum Documentation Searched [7]

| Classification System | Classification Symbols |
|---|---|
| IPC | B29B11/16, 15/08-15/14 |

Documentation Searched other than Minimum Documentation
to the Extent that such Documents are Included in the Fields Searched [8]

| | |
|---|---|
| Jitsuyo Shinan Koho | 1952 - 1991 |
| Kokai Jitsuyo Shinan Koho | 1972 - 1991 |

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| Y | JP, A, 54-40873 (Toray Industries, Inc.), March 31, 1979 (31. 03. 79), (Family: none) | 1-5 |
| Y | JP, A, 1-263005 (Kobe Steel, Ltd.), October 19, 1989 (19. 10. 89), (Family: none) | 1-5 |
| Y | JP, A, 61-229535 (Koseino Jushi Shin Seizo Gijutsu Kenkyu Kumiai), October 13, 1986 (13. 10. 86), (Family: none) | 1-5 |
| Y | JP, A, 64-61557 (Koseino Jushi Shin Seizo Gijutsu Kenkyu Kumiai), March 8, 1989 (08. 03. 89), (Family: none) | 1-5 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search | Date of Mailing of this International Search Report |
|---|---|
| March 3, 1992 (03. 03. 92) | March 24, 1992 (24. 03. 92) |

| International Searching Authority | Signature of Authorized Officer |
|---|---|
| Japanese Patent Office | |

Form PCT/ISA/210 (second sheet) (January 1985)